# FASCICULE DE BREVET EUROPEEN

(11) **EP 2 093 820 B1**
(45) Date de publication et mention de la délivrance du brevet: **13.04.2011**
(21) Numéro de dépôt: 09290033.1
(22) Date de dépôt: 16.01.2009
(51) Int. Cl.: H01M 2/22, B23K 26/18, B23K 26/32

(54) **Connection électrique pour accumulateur de courant**
Elektrische Verbindung für Stromakkumulator
Electric connection for current accumulator

(30) Priorité: 22.02.2008 FR 0800959
(43) Date de publication de la demande: 26.08.2009
(73) Titulaire: Saft Groupe S.A., 93170 Bagnolet (FR)
(72) Inventeur: Masson, Olivier, 33440 St Vincent de Paul (FR); Rigobert, Gérard, 33370 Fargues St Hilaire (FR); Vezat, Christian, 33127 Saint Jean d'Illac (FR)
(74) Mandataire: Hirsch, Marc-Roger

(56) Documents cités:
- EP-A- 0 491 959
- EP-A- 1 134 820
- FR-A- 2 853 764
- JP-A- 3 106 582
- US-A- 5 773 164

## Description

La présente invention se rapporte à une connexion électrique entre une borne de sortie de courant et les électrodes d'une polarité d'un faisceau électrochimique dans un accumulateur.

Un générateur électrochimique ou accumulateur (ces deux termes étant équivalents, on utilisera le terme d'accumulateur dans la présente description) est un dispositif de production d'électricité dans lequel de l'énergie chimique est convertie en énergie électrique. L'énergie chimique est constituée par des composés électrochimiquement actifs déposés sur au moins une face d'électrodes disposées dans l'accumulateur. L'énergie électrique est produite par des réactions électrochimiques au cours d'une décharge de l'accumulateur. Les électrodes, disposées dans un conteneur, sont connectées électriquement à des bornes de sortie de courant qui assurent une continuité électrique entre les électrodes et un consommateur électrique auquel l'accumulateur est associé. Les bornes de sortie de courant positive et négative peuvent être fixées soit sur les parois de faces opposées du conteneur de l'accumulateur soit sur la paroi d'une même face du conteneur.

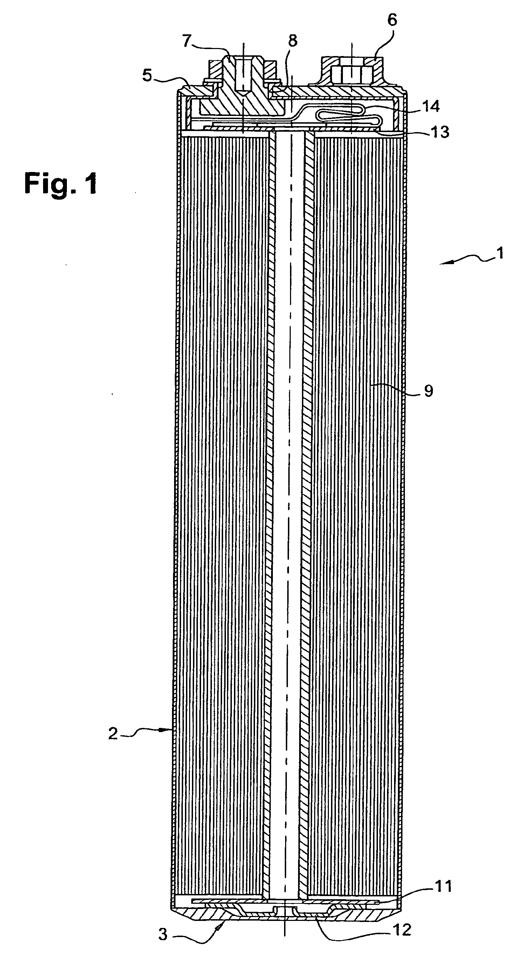

La Figure 1 montre un accumulateur cylindrique étanche de type connu.

Un accumulateur 1 comprend un faisceau électrochimique 9 comportant une alternance d'électrodes positives et négatives encadrant des séparateurs imprégnés d'électrolyte. Typiquement, chaque électrode est composée d'un collecteur de courant métallique, appelé aussi feuillard, supportant sur au moins une de ses faces la matière électrochimiquement active. Le faisceau électrochimique 9 est disposé dans un conteneur étanche 2 présentant une paroi cylindrique obturée par un fond 3 à une extrémité et couverte à l'autre extrémité par un couvercle 5 qui supporte des bornes de sortie de courant 6 et 7. Une première borne de sortie de courant, dans l'exemple la borne positive 6, est généralement soudée sur le couvercle. Une seconde borne de sortie de courant, dans l'exemple la borne négative 7, passe à travers le couvercle; elle est généralement fixée sur celui-ci par sertissage et des joints 8 isolent électriquement la borne de sortie de courant négative 7 du couvercle 5.

Les bornes de sortie de courant 6, 7 assurent la continuité électrique entre les électrodes et l'application extérieure à laquelle l'accumulateur est associé. Il existe plusieurs façons de raccorder électriquement les électrodes d'une polarité à une des bornes de sortie de courant du conteneur. Une solution possible consiste à utiliser une connexion plane appliquée sur les collecteurs des électrodes d'une même polarité. Cette solution connue est illustrée sur la figure 1; une connexion plane 11 raccorde les électrodes positives du faisceau 9 entre elles et une pièce conformée conductrice 12 relie cette connexion plane 1 à la paroi du fond 3 du conteneur, les parois du conteneur étant électriquement conductrices avec le couvercle 5 et la borne positive 6 soudée au couvercle. De même, une connexion plane 13 raccorde les électrodes négatives du faisceau 9 entre elles et une connexion électrique interne sous forme de languette 14 relie cette connexion plane 13 à la borne de sortie de courant négative 7. La languette 14 peut former au moins un pliage afin d'apporter un effet élastique au raccordement électrique entre les électrodes négatives et la borne de sortie de courant négative qui compense les variations de hauteur des faisceaux électrochimiques d'un accumulateur à l'autre.

Typiquement, le dispositif de raccordement électrique à la borne traversante du conteneur - la borne négative dans l'exemple de la figure 1 - est assemblé de la façon suivante. La connexion plane 13 est soudée sur les collecteurs des électrodes d'une même polarité, puis la languette 14 est soudée à la connexion plane 13 et sur le pied de la borne traversante 7. La languette 14 est alors repliée dans l'accumulateur lors de la fermeture du conteneur 2 par le couvercle 5. Une telle connexion interne est notamment décrite dans les documents EP-A-1 102 337 ou EP-A-1 596 449.

Pour des applications de puissance, il est nécessaire d'assurer le passage de courants forts à travers les connexions de l'accumulateur, par exemple des courants supérieurs à 100 A. On choisira donc de réaliser les connexions avec des matériaux de bonne conductibilité tel que le cuivre ou l'aluminium. Typiquement, les feuillards des électrodes négatives sont en cuivre et les feuillards des électrodes positives sont en aluminium pour des raisons de compatibilité avec les matières actives, notamment pour les accumulateurs de type Lithium-Ion. Ainsi, dans la technologie lithium ion, la borne positive est généralement reliée au conteneur en aluminium et la borne négative est généralement traversante et en cuivre. La connexion plane 13 et la languette 14 sont aussi généralement choisies en cuivre pour assurer la bonne conduction des courants forts et la compatibilité avec la borne négative en cuivre. Il est à noter que la connexion plane 13 et la languette 14 peuvent ne former qu'une seule pièce ayant une forme appropriée et qui est soudée directement sur les collecteurs de électrodes repliés comme décrit dans le document EP-A-1 596 449.

La pièce de connexion interne (pièce unique ou languette 14 soudée à une connexion plane 13) doit être soudée aux collecteurs des électrodes négative en cuivre puis au pied de la borne traversante 7. Dans la technologie lithium ion, les soudures sont typiquement réalisées au laser. Or, la soudure laser n'est pas efficace sur du cuivre car le faisceau laser est naturellement réfléchi par le cuivre. Pour pallier ce phénomène, il est connu d'utiliser une plaque de nickel que l'on interpose entre le cuivre et le faisceau laser afin de « tromper » le laser et transmettre l'énergie thermique du laser vers le cuivre à souder. La soudure de la pièce de connexion interne nécessite donc trois pièces ; la pièce de connexion elle-même, une plaque de soudure en nickel à placer sur la portion à souder aux collecteurs et une plaque de soudure en nickel à placer sur la portion à souder au pied de la borne traversante.

Il est également connu, notamment du document EP-A-1 596 449, d'utiliser une pièce de connexion interne en cuivre nickelé. Le revêtement nickel, de quelques microns, est appliqué pour prévenir toute oxydation de la pièce en cuivre et n'est pas assez épais pour capter l'énergie du laser lors d'une soudure. Des pièces additionnelles de soudure en nickel doivent toujours être utilisées avec une pièce de connexion en cuivre nickelé.

Le document US-A-5 773 164 décrit une borne pour batterie prismatique. La borne peut être en cuivre, nickel ou cuivre nickelé. Le document EP-A-1 134 820 décrit un procédé de raccordement des lamelles d'une électrode à une borne d'un générateur. Un élément de maintien tel qu'une bague ou une rondelle est utilisé pour maintenir les lamelles d'une électrode qui sont soudées à la borne par soudage laser à travers l'élément de maintien. La bague ou la rondelle peuvent être en nickel ou en cuivre nickelé.

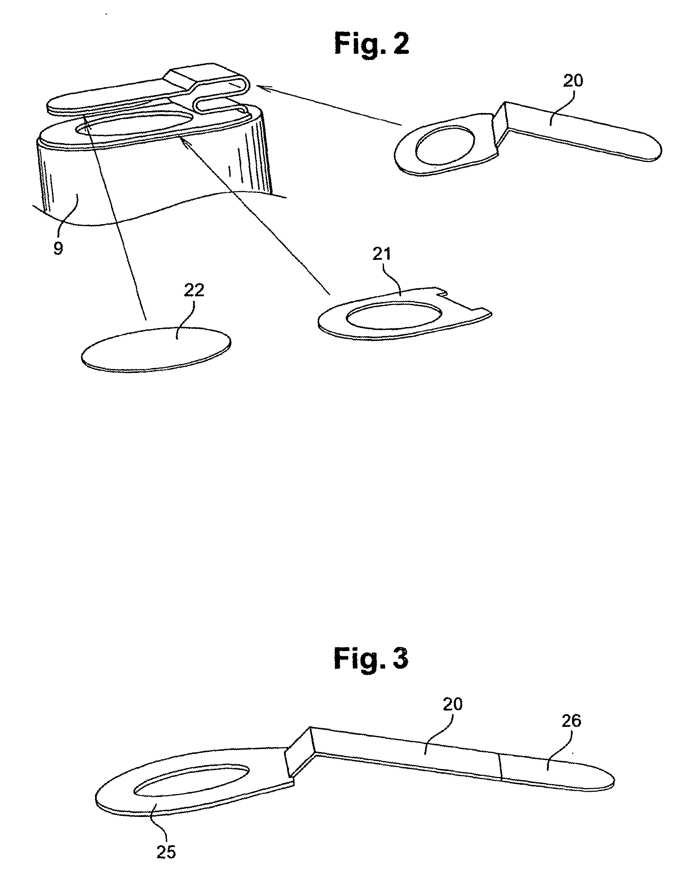

La figure 2 illustre une telle connexion interne selon l'art antérieur.

La figure 2 montre schématiquement la partie supérieure d'un faisceau électrochimique 9 sur lequel une pièce de connexion interne 20 a été soudée. On remarque sur la figure 2 que la pièce de connexion 20 est recouverte d'une plaque en nickel 21 sur la portion qui a été soudée au faisceau électrochimique 9. L'extrémité libre de cette connexion interne 20 est destinée à connecter électriquement le pied de la borne traversant le couvercle du conteneur lorsque le faisceau électrochimique sera introduit dans le conteneur (non illustré). On remarque aussi sur la figure 2 que la pièce de connexion 20 est recouverte d'une autre plaque en nickel 22 sur la portion qui doit être soudée au pied de la borne traversante. La figure 2 montre aussi une vue éclatée des trois pièces : la pièce de connexion interne 20 et les deux plaques de soudure 21, 22.

La gestion simultanée de ces trois pièces complexifie le procédé de fabrication de l'accumulateur et représente un coût. De plus, ces plaques de nickel, de 0,5 mm d'épaisseur environ, restent ensuite dans l'accumulateur bien qu'elles ne servent qu'à la soudure de la connexion interne. Or, on cherche à réaliser des accumulateurs de plus en plus compacts et légers ; on cherche donc à supprimer toute pièce inutile au fonctionnement de l'accumulateur.

Il existe donc un besoin pour une pièce de connexion électrique interne simplifiée qui permette une soudure sans utiliser de pièces additionnelles tout en conservant une faible résistance pour permettre le passage de courants forts.

A cet effet, l'invention propose d'utiliser une pièce de connexion électrique interne en cuivre avec au moins une portion colaminée cuivre/nickel. Le passage de forts courants est garanti par la connexion en cuivre et la soudure devient possible directement grâce à la couche de nickel laminée sur le cuivre.

Plus particulièrement, l'invention concerne un accumulateur de courant comprenant :
- un conteneur contenant un faisceau électrochimique comprenant une alternance d'électrodes positives et négatives encadrant des séparateurs imprégnés d'électrolyte ;
- une borne de sortie de courant traversant une paroi du conteneur ;
- une pièce de connexion interne reliant électriquement les électrodes d'une des polarités à la borne traversante, ladite connexion interne étant en cuivre avec au moins une portion colaminée cuivre/nickel ;
- la pièce de connexion interne présente une épaisseur comprise entre 0,5 mm et 1 mm; et
- la couche de nickel présente une épaissseur comprise entre 0,1 mm et 0,3 mm.

Selon les modes de réalisation, l'accumulateur selon l'invention peut comprendre en outre une ou plusieurs des caractéristiques suivantes :
- la pièce de connexion interne comprend deux portions colaminées cuivre/nickel ;
- la pièce de connexion interne est entièrement colaminée cuivre/nickel ;
- une portion colaminée cuivre/nickel de la pièce de connexion interne est une portion soudée aux électrodes d'une des polarités du faisceau électrochimique ;
- une portion colaminée cuivre/nickel de la pièce de connexion interne est une portion soudée à la borne traversante ;
- la pièce de connexion interne présente une épaisseur constante ;

D'autres caractéristiques et avantages de l'invention apparaîtront à la lecture de la description qui suit, donnée à titre d'exemple et en référence aux figures qui montrent :
- Figure 1, déjà décrite, une vue en coupe longitudinale d'un accumulateur cylindrique étanche selon un art antérieur ;
- Figure 2, déjà décrite, une vue d'une connexion électrique interne soudée à un faisceau électrochimique selon l'art antérieur ;
- Figure 3, une vue d'une connexion électrique interne selon l'invention.

L'invention concerne un accumulateur étanche 1 comprenant une pièce de connexion électrique interne simplifiée. L'accumulateur selon l'invention comprend un conteneur 2 contenant un faisceau électrochimique 9 et des bornes de sorties de courant 6, 7, avec une borne positive 6 ayant la même polarité que la paroi du conteneur et une borne négative 7 traversant la paroi du conteneur. Une pièce de connexion interne 20 raccorde électriquement les électrodes négatives du faisceau électrochimique à la borne de sortie de courant traversante 7.

Selon l'invention, la pièce de connexion interne 20 est en cuivre et présente au moins une portion colaminée cuivre/nickel. La pièce de connexion interne 20 peut présenter deux portions colaminées cuivre/nickel comme sur la figure 3 ou être entièrement colaminée cuivre/nickel. Sur la figure 3, la pièce de connexion interne 20 présente une portion colaminée cuivre/nickel 25 sur la portion qui doit être soudée au faisceau électrochimique et une portion colaminée cuivre/nickel 26 sur la portion qui doit être soudée au pied de la borne traversante.

La pièce de connexion interne 20 selon l'invention permet une soudure laser avec le faisceau électrochimique et la borne de sortie de courant sans pièces additionnelles car l'énergie thermique du laser sera absorbée par la couche de nickel. La soudure sera malgré tout solide et propre puisque la pièce de connexion 20 sera soudée par sa couche de cuivre aux collecteurs cuivre et à la borne négative en cuivre.

La pièce de connexion interne 20 selon l'invention permet aussi le passage de courants forts pour des applications de puissance. La résistance interne d'un accumulateur avec une pièce de connexion interne 20 selon l'invention a été mesurée et comparée à la résistance interne d'un accumulateur selon l'art antérieur avec une pièce de connexion entièrement cuivre. La résistance interne de l'accumulateur selon l'invention est sensiblement la même que la résistance interne d'un accumulateur avec une connexion entièrement cuivre.

La pièce de connexion interne 20 peut être réalisée par emboutissage d'une feuille de nickel laminée sur une languette de cuivre conformée. La pièce de connexion interne 20 présente une épaisseur constante sur toute sa longueur, de l'ordre de 0,5 mm à 1 mm. La couche de nickel laminée sur la pièce de connexion interne en cuivre présente une épaisseur de l'ordre de 0,1 mm à 0,3 mm. Une telle épaisseur de nickel est suffisante pour « tromper » le laser lors de la soudure cuivre sur cuivre et suffisamment faible pour ne pas trop réduire l'épaisseur de la connexion cuivre ce qui augmenterait la résistance de la pièce de connexion.

L'épaisseur des plaques de nickel de l'art antérieur a ainsi pu être gagnée pour des accumulateurs plus compacts et plus légers. Le prix de fabrication des accumulateurs a aussi pu être réduit car une pièce unique est utilisée pour la connexion interne.

En outre, la pièce de connexion interne 20 selon l'invention facilite considérablement la fabrication de l'accumulateur selon l'invention. En effet, l'assemblage de l'accumulateur peut être totalement automatisé, au moins jusqu'au pliage de la pièce de connexion interne lors de la fermeture du couvercle.

Les modes de réalisation décrits ci-dessus et les figures doivent être considérés comme ayant été présentés à titre illustratif et non restrictif, et l'invention n'est pas censée être limitée aux détails fournis ici mais peut être modifiée en restant dans le cadre de la portée des revendications annexées. En particulier, l'invention concerne tout type d'accumulateur, qu'il soit prismatique, cylindrique ou concentrique ; ou qu'il soit du type lithium-ion, nickel cadmium ou nickel métal hydrure. Ainsi, bien que la pièce de connexion interne selon l'invention ait été décrite en référence à une connexion avec la borne négative de l'accumulateur, on peut envisager des technologies dans lesquelles une borne en cuivre colaminée nickel selon l'invention serait utilisée avec la borne positive.

## Revendications

1. Accumulateur de courant (1) comprenant :
- un conteneur (2) contenant un faisceau électrochimique (9) comprenant une alternance d'électrodes positives et négatives encadrant des séparateurs imprégnés d'électrolyte ;
- une borne de sortie de courant (7) traversant une paroi (5) du conteneur ;
- une pièce de connexion interne (20) reliant électriquement les électrodes d'une des polarités à la borne traversante, **caractérisé en ce que** ladite connexion interne est en cuivre avec au moins une portion colaminée cuivre/nickel (25,26), et **en ce que** la pièce de connexion interne présente une épaisseur comprise entre 0.5 mm et 1 mm et la couche de nickel présente une épaisseur comprise entre 0,1 mm et 0,3 mm.

2. Accumulateur selon la revendication 1, dans lequel la pièce de connexion interne comprend deux portions colaminées cuivre/nickel.

3. Accumulateur selon la revendication 1, dans lequel la pièce de connexion interne est entièrement colaminée cuivre/nickel.

4. Accumulateur selon l'une des revendications 1 à 3, dans lequel une portion colaminée cuivre/nickel (25) de la pièce de connexion interne est une portion soudée aux électrodes d'une des polarités du faisceau électrochimique.

5. Accumulateur selon l'une des revendications 1 à 4, dans lequel une portion colaminée cuivre/nickel (26) de la pièce de connexion interne est une portion soudée à la borne traversante (7).

6. Accumulateur selon l'une des revendications 1 à 5, dans lequel la pièce de connexion interne présente une épaisseur constante.

## Claims

1. An electrical storage cell (1) comprising:
- a container (2) containing an electrode plate group (9) comprising alternating positive and negative electrodes flanking electrolyte-impregnated separators;
- a current output terminal (7) passing through a wall (5) of the container;
- an internal connection part (20) electrically connecting the electrodes of one polarity to the terminal passing through a wall of the container, **characterised in that** said internal connection part is of copper with at least one copper/nickel co-laminated portion (25, 26), and **in that** the internal connection part has a thickness comprised between 0.5 mm and 1 mm and the nickel layer has a thickness comprised between 0.1 mm and 0.3 mm.

2. The storage cell according to claim 1, in which the internal connection part comprises two copper/nickel co-laminated portions.

3. The storage cell according to claim 1, in which the internal connection part is entirely copper/nickel co-laminated.

4. The storage cell according to one of claims 1 to 3, in which a copper/nickel co-laminated portion (25) of the internal connection part is a portion designed to be welded to the electrodes of one of the polarities of the electrode plate group.

5. The storage cell according to one of claims 1 to 4, in which a copper/nickel co-laminated portion (26) of the internal connection part is a portion designed to be welded to the terminal passing through a wall of the container (7).

6. The storage cell according to one of claims 1 to 5, in which the internal connection part has a substantially constant thickness.

## Patentansprüche

1. Akkumulator(1), der Folgendes umfasst:
- eine Blockkaste (2), die ein elektrochemisches Bündel (9) enthält, das abwechselnd positive und negative Elektroden umfasst, die mit Elektrolyten imprägnierte Separatoren einfassen;
- einen Stromausgangspolkopf (7), der durch eine Wand (5) der Blockkaste dringt;
- ein Teil zur internen Verbindung (20), das die Elektroden einer der Polaritäten elektrisch mit dem durchdringenden Polkopf verbindet, **dadurch gekennzeichnet, dass** die interne Verbindung aus Kupfer mit mindestens einem mit Kupfer/Nickel kolaminierten Abschnitt (25, 26) ist und dass das Teil zur internen Verbindung eine Dicke zwischen 0,5 mm und 1 mm aufweist und die Nickelschicht eine Dicke zwischen 0,1 mm und 0,3 mm aufweist.

2. Akkumulator nach Anspruch 1, in dem das Teil zur internen Verbindung zwei mit Kupfer/Nickel kolaminierte Abschnitte umfasst.

3. Akkumulator nach Anspruch 1, in dem das Teil zur internen Verbindung vollständig mit Kupfer/Nickel kolaminiert ist.

4. Akkumulator nach einem der Ansprüche 1 bis 3, in dem ein mit Kupfer/Nickel kolaminierter Abschnitt (25) des Teils zur internen Verbindung ein Abschnitt ist, der an die Elektroden einer der Polaritäten des elektrochemischen Bündels geschweißt ist.

5. Akkumulator nach einem der Ansprüche 1 bis 4, in dem ein mit Kupfer/Nickel kolaminierter Abschnitt (26) des Teils zur internen Verbindung ein Abschnitt ist, der an den durchdringenden Polkopf (7) geschweißt ist.

6. Akkumulator nach einem der Ansprüche 1 bis 5, in dem das Teil zur internen Verbindung eine konstante Dicke aufweist.
